# EUROPEAN PATENT APPLICATION

(11) **EP 4 737 905 A1**
(43) Date of publication of application: **06.05.2026**
(21) Application number: 24827719.6
(22) Date of filing: 27.03.2024
(51) Int. Cl.: G01N 35/02

(54) **SPECIMEN PROCESSING DEVICE AND SPECIMEN PROCESSING METHOD**

(30) Priority: 30.06.2023 JP 2023108604
(71) Applicant: HITACHI HIGH-TECH CORPORATION, Tokyo 105-6409 (JP)
(72) Inventor: IKEGAMI Tomoko, Tokyo 105-6409 (JP); KAKUNO Masahito, Tokyo 105-6409 (JP); UMEKI Taro, Tokyo 105-6409 (JP)
(74) Representative: Strehl & Partner mbB
(86) International application number: PCT/JP2024/012421
(87) International publication number: WO 2025/004481

(57) **Abstract**

The present invention includes: a plurality of specimen container holders 203 for holding one specimen container 201; a function module 3 for performing processing accompanying an analysis of a specimen; a conveyance unit 4 which is connected to the function module 3 and conveys the specimen container 201 held by the specimen container holders 203 to the function module 3; and a control unit 2 which, when it is determined that a plurality of specimen containers 201 having the same identification information are present when acquiring analysis request items of the specimen, assigns request items for each of the specimen containers 201, or a control unit 2 which, when it is determined that a plurality of specimen containers 201 having the same identification information are present, controls the conveyance of the specimen containers 201 having the same identification information on the basis of the conveyance status of the other specimen containers 201 having the same identification information.

## Description

### Technical Field

The present invention relates to a specimen processing device and a specimen processing method for performing pre-processing of specimens such as blood and urine before transmitting the specimens to an automatic analysis device and for performing post-processing associated with analysis.

### Background Art

It is described that, in order to collectively communicate, convey, and control a plurality of carriers, a management unit that holds the overall state of a specimen conveyance system and specimen information generates group information, which configures a batch to be simultaneously processed, on the basis of specimen attributes and request information. A unit comprising conveyance lines, junction lines, and processing sections controls the receipt of carriers at merging points on the basis of the group information, thereby enabling group management control of the carriers.

### Citation List

### Patent Literature

PTL 1: JP2012-154758A

### Summary of Invention

### Technical Problem

In recent years, in a clinical test at medical facilities, when the number of test items increases or the amount of blood required for analysis exceeds the capacity of a single specimen container due to blood collection tubes (hereinafter referred to as "specimen containers") used at the facility, a plurality of specimen containers may require the same processing. These are generally referred to as a plurality of specimens or a plurality of specimens with the same ID, and the same specimen identifier (barcode, RFID, or the like) may be attached to the specimen containers.

In a specimen processing device, a carrier (hereinafter referred to as "holder") capable of loading a single specimen container containing a test sample, such as blood or body fluid, or a carrier capable of loading a plurality of specimen containers is used to convey the specimen container between function modules within the specimen processing device.

In such a specimen processing device, information linked with a specimen ID is received from a host system on the basis of a specimen identifier (specimen ID) attached to the specimen container, and processing contents are determined from the information. Depending on a medical facility, a plurality of specimen containers with the same ID may be generated in accordance with test contents.

In a specimen processing device of the related art, a plurality of specimens with the same identifier are loaded onto a carrier capable of loading a plurality of specimen containers, and then inserted and conveyed into the device to process the plurality of specimens with the same identifier.

However, for example, when a single specimen container occupies a carrier in spite of being capable of loading a plurality of specimen containers, there is a concern of a shortage of carriers for the entire specimen processing device. In this case, since the specimen containers cannot be loaded, specimen processing has to be adjusted not to start until all specimen containers are collected, or wait until a carrier loaded with a specimen for which analysis has completed is discharged. Therefore, there is a possibility of delays in test results, and thus resolution of this issue is awaited.

In a specimen processing device provided in PTL 1, for handling specimens from the same patient in the specimen processing device using a carrier loaded with a single specimen container, group information for executing the same processing is generated at the time of inserting the specimen container, and a plurality of specimens are handled by conveyance control based on the group information by using evacuation areas of carriers installed in function modules in the specimen processing device.

On the other hand, for a plurality of specimen containers having the same specimen identifier, handling in a specimen processing device using a holder loaded with only a single specimen container has not been realized. This is because, in a specimen processing device, each specimen container is handled using a specimen identifier assigned to the specimen container as a primary key, and a control method for processing a plurality of specimen containers with duplicate primary keys has not been established.

Unlike a carrier that is loaded with a plurality of specimen containers, in a specimen processing device using a holder loaded with a single specimen container, the holder and the specimen container are linked to each other in a one-to-one relationship. For this reason, in a specimen processing device including a plurality of function modules and managing complex conveyance paths, there is an advantage in that conveyance control of a single specimen container can be handled more flexibly.

However, when specimen identifiers used for conveyance control are the same and the total amount is unknown, the conveyance control mechanism itself has to be changed.

PTL 1 discloses that an area for evacuating specimen containers is provided for each carrier until all specimen containers are collected in each function module, in order to realize continuity in the conveyance of a plurality of related specimens. For this reason, since the overall scale of the specimen processing device increases, it is preferable to achieve miniaturization.

In addition, exceeding the number of carriers stored in an evacuation area may cause congestion in a conveyance line part, resulting in a concern of delays in conveyance within the specimen processing device. Such delays may lead to delays in reporting test results and deterioration of clinical test specimens due to an increase in an elapsed time and may affect the test results, and thus resolution of this issue is awaited.

In view of the above problems, an object of the present invention is to provide a specimen processing device and a specimen processing method that maintain the flexibility of conveyance of specimen containers using a holder that holds a single specimen container, while realizing the handling of a plurality of specimens for achieving an improvement in the processing efficiency of the specimens regardless of continuity of the specimen containers.

### Solution to Problem

The present invention includes a plurality of means for solving the above problems, and an example thereof is a specimen processing device including a plurality of specimen container holders each of which holds a single specimen container containing a specimen and having identification information assigned thereto, a processing module that performs pre-processing or post-processing associated with analysis of the specimen, a conveyance unit that is connected to the processing module and conveys the specimen container held in the specimen container holder to the processing module, and a control unit that allocates a request item to each specimen container when it is determined that there are a plurality of the specimen containers with the same identification information at the time of acquiring the analysis request item for the specimen.

Another example thereof is a specimen processing device including a plurality of specimen container holders each of which holds a single specimen container containing a specimen and having identification information assigned thereto, a processing module that performs pre-processing or post-processing associated with analysis of the specimen, a conveyance unit that is connected to the processing module and conveys the specimen container held in the specimen container holder to the processing module, and a control unit that controls, when there are a plurality of specimen containers having the same identification information, the conveyance of other specimen containers having the same identification information on the basis of the conveyance status of the specimen containers having the same identification information.

### Advantageous Effects of Invention

According to the present invention, it is possible to maintain the flexibility of conveyance of specimen containers using a holder that holds a single specimen container and to realize the handling of a plurality of specimens for achieving an improvement in the processing efficiency of the specimens regardless of continuity of the specimen containers. Problems, configurations, and effects other than those described above will become apparent from the following description of an embodiment.

### Brief Description of Drawings

[Fig. 1] Fig. 1 is a diagram showing an example of a configuration model of a specimen processing device according to an embodiment and an example of a relationship with a host system.
[Fig. 2] Fig. 2 is a diagram showing an example of the configurations of a specimen container and a holder used in a specimen processing device.
[Fig. 3] Fig. 3 is a flow diagram showing an example of a flow of processing of a specimen processing method for a plurality of specimens according to an embodiment.
[Fig. 4] Fig. 4 is a diagram showing an example of a specimen container number registration screen in a specimen processing device according to an embodiment.
[Fig. 5] Fig. 5 is a diagram showing an example of a specimen container request information registration screen in a specimen processing device according to an embodiment.
[Fig. 6] Fig. 6 is a diagram showing an example of specimen registration information recorded in a control unit of a specimen processing device according to an embodiment.
[Fig. 7] Fig. 7 is a flow diagram showing another example of a flow of processing of a specimen processing method for a plurality of specimens according to an embodiment.
[Fig. 8] Fig. 8 is a flow diagram showing still another example of a flow of processing of a specimen processing method for a plurality of specimens according to an embodiment.

### Description of Embodiments

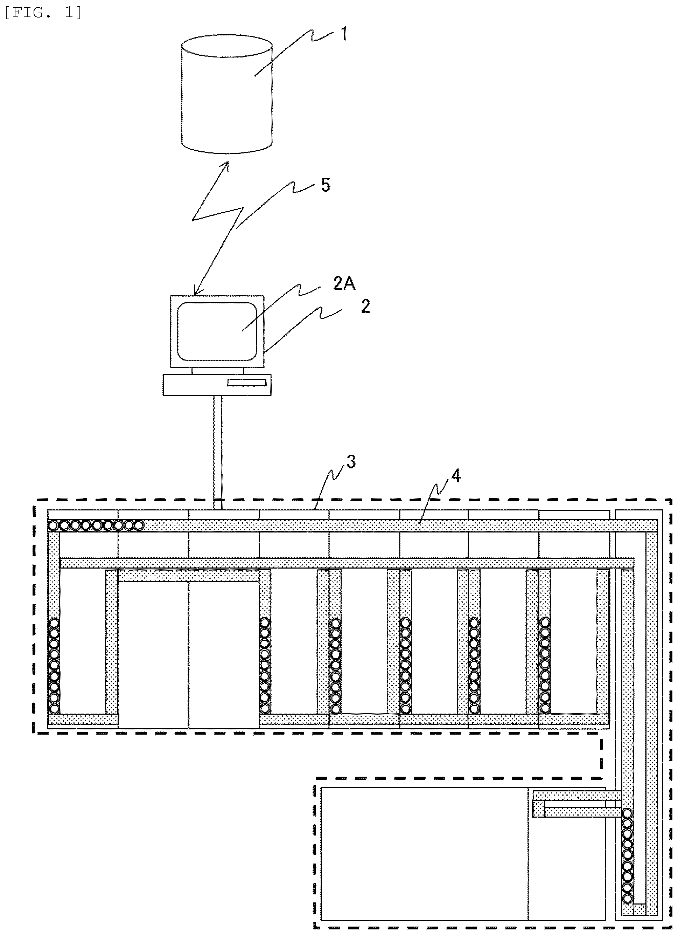

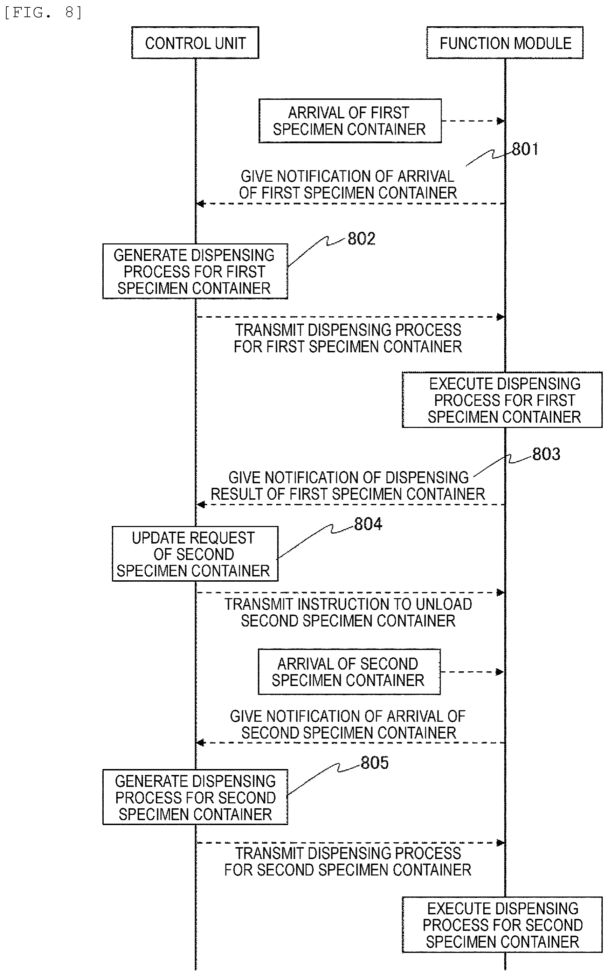

An embodiment of a specimen processing device and a specimen processing method of the present invention will be described with reference to Figs. 1 to 8. In the drawings used in this specification, identical or corresponding components are denoted by the same or similar reference numerals, and repeated description of these components may be omitted.

First, the overall configuration of a structural model of a host system and the specimen processing device will be described with reference to Fig. 1. Fig. 1 is a plan view showing the overall configuration of a specimen analysis system including a conveyance device according to this embodiment.

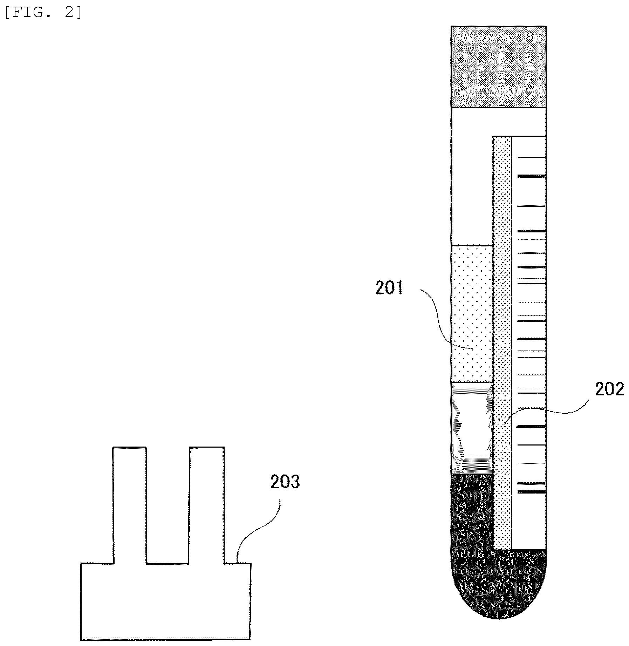

As shown in Fig. 1, the specimen processing device in this embodiment includes a function module 3 that performs pre-processing or post-processing associated with specimen analysis, a conveyance unit 4 that is connected to the function module 3 and conveys specimen containers 201 (see Fig. 2) held in a plurality of specimen container holders 203 (see Fig. 2) each holding a single specimen container 201 to the function module 3, and a control unit 2.

The conveyance unit 4 is not particularly limited in detail and may adopt various known configurations such as belt conveyance or electromagnetic conveyance, as long as it is capable of conveying the specimen container holder 203, which holds a single specimen container 201, to its destination.

The control unit 2 controls the operation of the entire system including the function module 3 and the conveyance unit 4, and is configured with a computer including a display unit 2A such as a liquid crystal display, an input device, a storage device, a CPU, a memory, and the like. The control unit 2 controls the operation of each device on the basis of various programs recorded in the storage device.

Note that a process of controlling an operation executed by the control unit 2 may be integrated into one program or divided into a plurality of programs, or may be a combination thereof. In addition, some or all of the programs may be implemented by dedicated hardware or may be modularized.

In this embodiment, when the control unit 2 determines that there are a plurality of specimen containers 201 with the same identification information at the time of acquiring analysis request items for a specimen, the control unit 2 allocates the request items to each specimen container 201. When there are a plurality of specimen containers 201 with the same identification information, the control unit 2 controls the conveyance of other specimen containers 201 with the same identification information on the basis of the conveyance status of the specimen containers 201 with the same identification information. Details thereof will be described later.

In this embodiment, when there are a plurality of specimen containers 201 with the same identification information, the display unit 2A displays a setting screen for setting analysis request items for each specimen container 201 with the same identification information. Details thereof will be described later.

The specimen processing device is installed under a host system 1, and the control unit 2 inquires the host system 1 about request information 5 required for processing a specimen, and the information is transmitted from the host system 1 to the control unit 2, or necessary information is transmitted from the host system 1 to the control unit 2 as appropriate.

When a specimen container 201 is inserted into a specimen processing device of the related art, the device transmits an arrival notification to the host system 1 on the basis of specimen identification information recorded on a specimen identifier 202 attached to the specimen container 201 shown in Fig. 2, and the host system 1 transmits specimen processing contents to the specimen processing device on the basis of the notification. In addition, the host system 1 may transmit specimen processing contents of a registered specimen before the arrival notification from the specimen processing device.

A flow of specimen processing contents between the host system 1 and the specimen processing device in the present invention is based on the assumption that a method of transmitting the specimen processing contents from the host system 1 upon the arrival notification from the specimen processing device is selected.

In each function module 3 within the specimen processing device, processing of each specimen container 201 is executed in response to an instruction from the control unit 2.

As shown in Fig. 2, the specimen container 201 containing a specimen has a specimen identifier 202 (identification information, typically a barcode or RFID) attached to its side surface and is conveyed to the specimen container holder 203 in a loaded state.

When the specimen container 201 is inserted into the function module 3 or loaded in the specimen container holder 203, the specimen identifier attached to the specimen container 201 is read by a reading device (not shown), and the specimen container holder 203 and the mounted specimen container 201 are linked to each other.

The specimen container 201 loaded in the specimen container holder 203 is moved between the function modules 3 by the conveyance unit 4. When the specimen container 201 moves between the function modules 3, the function module 3 notifies the control unit 2 of the passage of the specimen container holder 203 or the processing of the specimen container 201 in the function module 3 at a specific point of the conveyance unit 4. The present invention also has the above-mentioned functions of the specimen processing device of the related art.

Note that the number and arrangement of the function modules 3 and conveyance units 4 in the specimen processing device shown in Fig. 1 above are only an example, and the number and arrangement of the function modules 3 and conveyance units 4 are not particularly limited. In addition, it is possible to incorporate an analysis unit into the system. The analysis items in the analysis unit are not particularly limited, and the configuration of a known analysis unit that analyzes biochemical items or immune items, for example, can be adopted. Furthermore, when a plurality of analysis units are provided, they may have the same specifications or different specifications, and are not particularly limited.

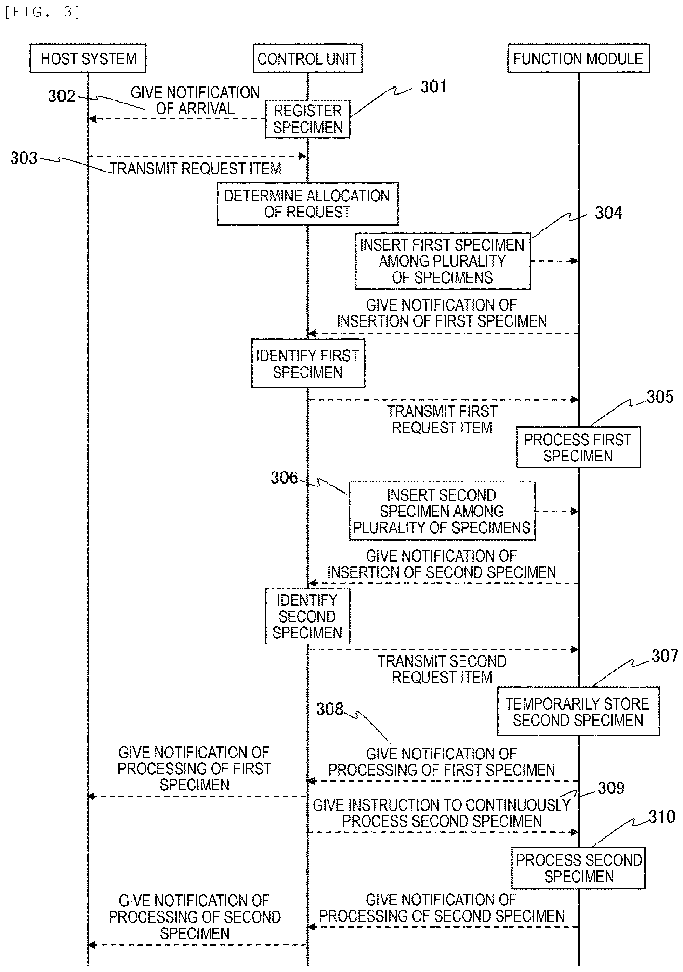

Next, characteristic configurations and processes of the specimen processing device and specimen processing method of the present invention will be described with reference to Fig. 3 and the subsequent drawings.

In the present invention, when a plurality of specimen container holders 203 each holding a single specimen container 201 containing a specimen and having identification information assigned thereto are conveyed to a function module 3 for performing pre-processing or post-processing associated with specimen analysis, and when it is determined that there are a plurality of specimen containers 201 with the same identification information at the time of acquiring analysis request items for a specimen, the request items are allocated to each specimen container 201, and the specimen containers 201 with the same identification information are individually conveyed to the function module 3 by the conveyance unit 4, thereby performing necessary pre-processing or post-processing.

Hereinafter, an example of a processing flow in the present invention when there are two specimen containers 201 (a plurality of specimens) with the same identifier will be described with reference to Fig. 3.

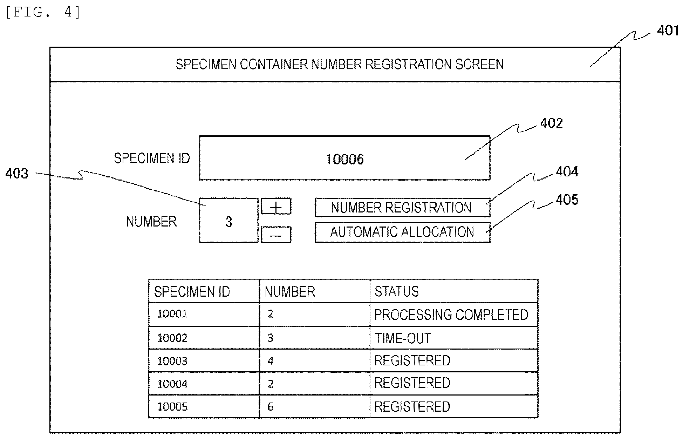

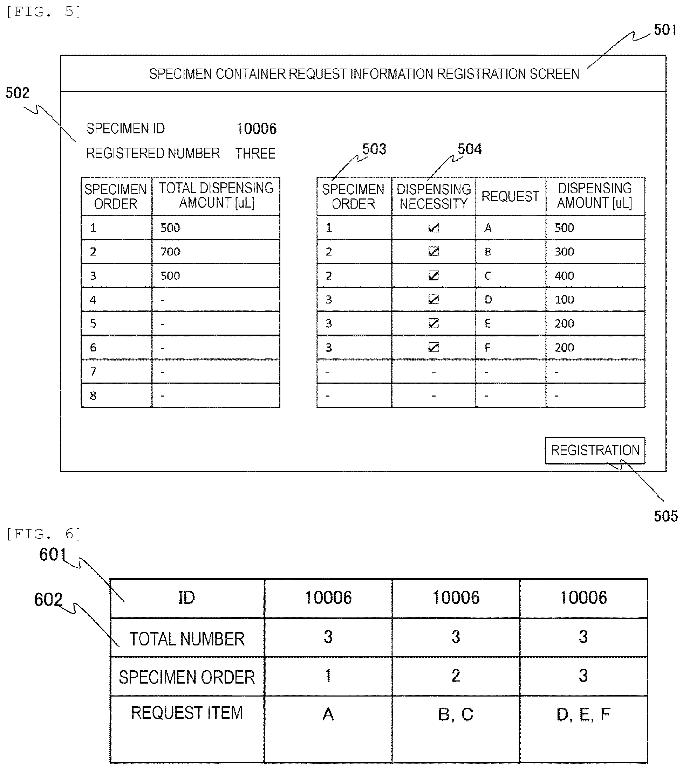

As shown in Fig. 3, before the specimen container 201 is inserted, the number of plural specimens with the same identifier and allocation contents of request items are registered in the control unit 2 (301). For the specimen containers 201 with the same identifier to be registered, a specimen identifier 402 (specimen ID here) and the number 403 of specimen containers 201 are input on a number registration screen 401 for the specimen containers 201 in Fig. 4. After the specimen ID and the number of specimen containers 201, which are necessary items, are input on the number registration screen 401 for the specimen containers 201, the screen of the control unit 2 transitions to a request information registration screen 501 shown in Fig. 5 by deciding with a trigger 404 for determining the number of tests.

Meanwhile, when the control unit 2 determines the number of specimen containers 201, it transmits an arrival notification of the specimen ID registered by the above-mentioned processing to the host system (302), and the host system responds to an inquiry from the control unit 2 and transmits request contents to the control unit 2 (303).

It is preferable that a registered specimen ID and a registered number 502 be displayed on a request information registration screen 501. In the request information registration screen 501, it is determined to which of a plurality of specimen containers 201 the request contents transmitted from the host system to the control unit 2 for the specimen ID registered on the previous screen should be allocated.

In this manner, the control unit 2 sets analysis request items for each specimen container 201 on the basis of the information on the number of specimen containers 201 with the same identification information notified of by the host system.

Regarding the allocation contents, the control unit 2 specifies standard allocation contents using the priority for each request registered in advance in the control unit 2 and limit setting of a total amount of dispensing for each specimen container 201 set for a plurality of specimens, and displays the contents at the time of screen transition.

Furthermore, the priority of the control unit 2 and the limit setting of the total amount of dispensing for each specimen container 201 are set to be changeable on a display screen, and a structure is adopted that allows settings to be made on the basis of the environment of a facility where the system is introduced. By having the settings, it is possible to respond to, for example, differences in types adopted at the facility where the system is introduced.

Here, since the amount of blood collected from the specimen container 201 differs depending on the type of specimen container, the amount of contents (specimen) for each specimen container 201 is not necessarily the same, but differs in most cases. Consequently, a larger total dispensing amount for each specimen container 201 is set for a specimen container with a large amount of collected blood, and thus it is possible to improve the efficiency of the subsequent dispensing process.

On the other hand, standard allocation contents are specified and displayed at the time of transition, and thus a user does not need to input all the allocation contents, which can also lead to a reduction in a work time for registration work.

Furthermore, it is preferable that the allocation contents of the standard request can be changed by the user. For example, the request information registration screen 501 shown in Fig. 5 is configured to be able to select whether to change the allocation contents by changing a specimen order 503 regarding to which specimen the request contents are to be allocated or by checking or not checking a dispensing necessity 504. Then, by determining the allocation contents on the request information registration screen 501 using a registration decision trigger 505 prepared on the screen, a request for a plurality of target specimens in the control unit 2 is determined.

In addition, when the user does not change the standard allocation contents described above and adopts the result of automatic allocation, a selection trigger 405 for automatic allocation can be selected on the number registration screen for the specimen containers 201, and a function of automatically reflecting the registration of the standard allocation contents described above can be provided. Thereby, it is also possible to simplify the user's operation.

Regarding registration of the number and request items described above, the user registration process itself can be eliminated by including them in information to be transmitted from the host system to the specimen processing device.

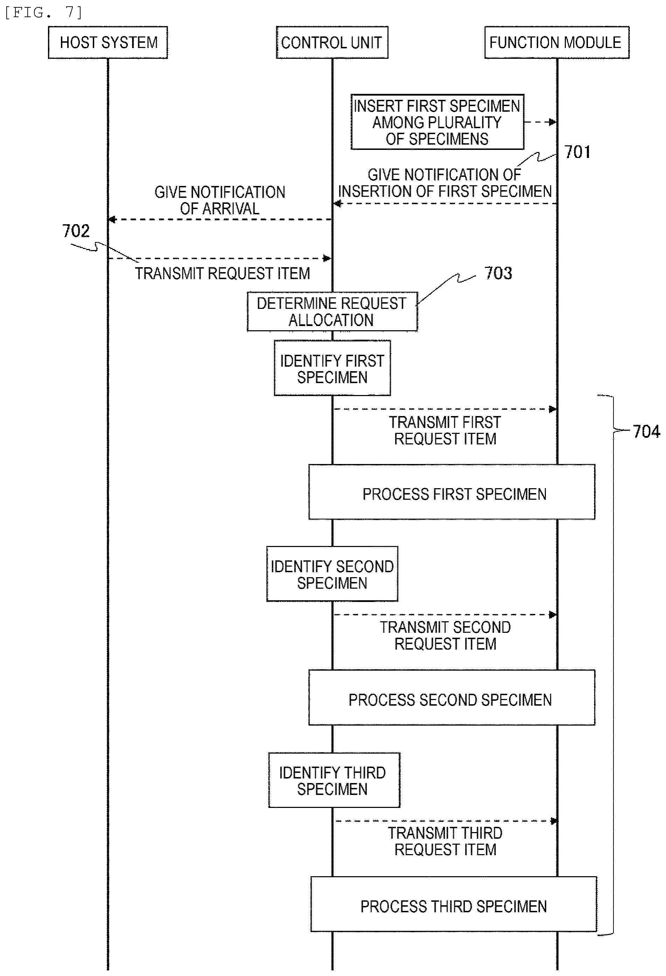

Fig. 6 shows an example of specimen information registered by the control unit 2 when there are three specimens with the same specimen identifier (specimen ID). When specimen containers 201 with a total number 602 of specimens corresponding to a target specimen ID 601 are inserted into the function module 3, request items are transmitted from the host system on the basis of an insertion notification 701 from the control unit 2 shown in Fig. 7 (702).

At this time, the control unit 2 automatically allocates the request items for the plurality of specimens on the basis of the received specimen information including the total number of specimens (703), and in the example shown in Fig. 6, the specimens in the first to third specimen containers 201 can be processed (704) in the order in which the inserted specimen containers 201 are identified by the control unit 2.

After request allocation information of a plurality of specimens is registered in the control unit 2, the specimen container 201 having the registered specimen identifier is inserted into the function module 3 for inserting specimen containers 201 in the specimen processing device (304), the specimen container 201 is transferred to the specimen container holder 203, and then specimen identification information is read.

The specimen identification information read by the function module 3 is sent as a notification to the control unit 2. Based on this information, the control unit 2 refers to specimen registration information, and when the specimen container 201 has specimen identification information that is registered as a plurality of specimens, the subsequent specimen processing contents are determined in accordance with the registered contents and transmitted to the function module 3 as a request item (305).

In addition, the control unit 2 determines which number among the registered specimen containers 201 the specimen container 201, which is inserted into the function module 3 and whose specimen identification information has been read, corresponds to. This determination is based on the order in which the specimen identification information is read after the specimen container 201 is inserted and notified from the function module 3 to the control unit 2 and based on this order, the control unit 2 determines the order and request contents for the corresponding specimen container 201 from the specimen registration information (306).

The specimen processing device is configured such that the inserted specimen container 201 is transferred to the specimen container holder 203, and the specimen identification information is read for each specimen container 201. For example, in the specimen registration information shown in Fig. 6, when three specimens with a specimen ID of "10006" are inserted, a specimen for which a first notification is transmitted to the control unit 2 is handled as a first specimen, and request contents are only "A". A specimen for which a second notification is transmitted is a second specimen, and request contents are "B" and "C".

In this manner, it is preferable to identify specimen containers 201 with the same identification information on the basis of the order in which the conveyance unit 4 starts conveying the specimen containers 201.

Regarding the specimen registration information in the control unit 2, registered contents can be changed before a registered specimen is inserted into the function module 3.

Furthermore, it is preferable for the control unit 2 in this embodiment to be able to select whether to change specimen processing contents after common processing or to perform the same processing depending on whether a specimen among a plurality of inserted specimens with the same ID is a first specimen, a second specimen, or any of the subsequent specimens.

The common processing here refers to processing performed by the specimen processing device depending on the state of an inserted specimen container 201. For example, in order to perform measurement in an analysis device after blood collection, for specimens to be measured in a biochemistry and immunology analysis device, it is necessary to confirm that the collected blood is sufficiently coagulated and then centrifuge the blood, and separate the contents in the specimen container 201 into the serum and clots or plasma and blood cell components. If necessary, it is necessary to perform dispensing it into separate containers and then convey the specimen.

In the specimen processing device, when a device that performs centrifugation is included within the device as the function module 3, the centrifugation process is handled as common processing. In addition, when the inserted specimen container 201 has a lid and the specimen processing device includes a function module 3 that opens the lid of the inserted specimen container 201, the lid opening process is also handled as common processing.

In addition, necessity is determined by the configuration of the function module 3 in the specimen processing device, and thus whether common processing is performed does not matter.

When a plurality of specimens with the same ID are inserted, the above-mentioned common processing is performed for the number of specimen containers 201 registered in the control unit 2, and then each specimen processing is performed.

However, for the second and subsequent specimen containers 201, after the common processing is performed, the specimen containers are temporarily stored in the function module 3 that stores the specimen containers 201 in the specimen processing device until all the specimen containers registered in the control unit 2 are inserted into the specimen processing device (307). On the basis of the result of the control unit 2 being notified that specific processing has been completed for a specimen container 201 corresponding to a specimen prior to the corresponding specimen container 201 (308), the control unit 2 gives a processing instruction (309) for the specimen container 201, and the subsequent processing is performed (310).

Then, the conveyance of a predetermined specimen container 201 is controlled on the basis of the conveyance status of the previous specimen container, such as the conveyance status of the second specimen container for the third specimen container, and the conveyance status of the third specimen container for the fourth specimen container.

Further, in this embodiment, it is preferable that the control unit 2 accept changes to the number of specimen containers 201, the registered contents, and the analysis request items that are set for each specimen container 201 until the conveyance of the first specimen container 201 is started.

More preferably, the control unit 2 preferably allows changes to registered contents for analysis request items that are set for each specimen container 201, on condition that, when all dispensing processes of the items set for the specimen container 201 were not successful in the conveyance status of the previous specimen container, the next specimen container exists and the conveyance status of the next specimen container is unprocessed.

The number of registered specimen containers 201, the registered contents, and the request items can be changed until the specimen container 201 arrives at a specific function module 3 for which a dispensing process is determined.

When a dispensing process in analysis request items set for each specimen container 201 is not completed, it is preferable that the control unit 2 continue processing with the specimen container 201 that has not yet been conveyed when there is a specimen container 201 that has not yet been conveyed, among the specimen containers 201 with the same identification information.

Specifically, when the specimen container 201 arrives at a specific function module 3, the function module 3 transmits an arrival notification to the control unit 2 (801), and the control unit 2 determines the contents of a dispensing process on the basis of the specimen identifier mounted on the specimen container 201 (802). When the dispensing process is completed, the function module 3 notifies the control unit 2 of a dispensing result (803).

At this time, when there is an item for which dispensing has not been successful, notification contents include a dispensing result indicating incompletion and contents of incomplete items, and the control unit 2 updates the request contents for the next specimen container from the received contents (804) and at the same time instructs the function module 3 to unload and convey the next specimen container from a primary storage location.

When the next specimen container arrives at a specific function module 3 for which a dispensing process is determined, the control unit 2 generates processing contents (805) to execute the processing of the items that were not completed in the previous specimen container on the basis of an arrival notification of the next specimen container, and gives an instruction to the function module 3.

In this series of processes, when there are specimens having the same specimen identifier in a specific function module 3 for which a dispensing process is determined, the contents of the dispensing process cannot be handed over to the next specimen container, and thus a plurality of specimens having the same ID of the second and subsequent specimen containers are temporarily stored in the function module 3 that stores specimen containers 201 in the specimen processing device.

On the other hand, when the number of specimens greater than the number which is specimen information registered in the control unit 2 are inserted, the control unit 2 can handle, as error specimens, the specimen containers 201 corresponding to the number greater than the registered number.

In addition, when a certain period of time has elapsed in a state where the number of specimen containers 201 smaller than the number which is the specimen information registered in the control unit 2 are inserted, the control unit 2 can generate an alert to the effect that the number of specimen containers 201 is insufficient on the basis of time-out setting of insertion of the specimen containers 201 which is set by the control unit 2. Furthermore, it is preferable to change the registered contents of the specimen information.

The control unit 2 changes, for the corresponding specimen containers 201, the registration contents of the number of specimen containers 201 and the request items of the corresponding specimen containers 201 to which a specimen identifier, for which a time-out has occurred, has been assigned, and resets conveyance control contents of the specimen containers 201 on the basis of the result of the change in registration information.

Next, the effects of this embodiment will be described.

The specimen processing device of the present embodiment described above includes the plurality of specimen container holders 203 each holding a single specimen container 201 containing a specimen and having identification information assigned thereto; the function module 3 performing pre-processing or post-processing associated with specimen analysis; the conveyance unit 4 connected to the function module 3 and conveying the specimen container 201 held in the specimen container holder 203 to the function module 3; and the control unit 2 that, when it is determined that there are a plurality of specimen containers 201 with the same identification information at the time of acquiring analysis request items for a specimen, allocates request items to the specimen containers 201, or the control unit 2 that, when there are a plurality of specimen containers 201 with the same identification information, controls the conveyance of other specimen containers 201 with the same identification information on the basis of the conveyance status of the specimen containers 201 with the same identification information.

When using the specimen container holder 203 that holds a single specimen container, it is possible to establish conveyance control regardless of the continuity of the specimen containers 201 in the specimen processing device by using specimen information in which the number of specimen containers 201 and the processing contents of the specimen containers 201 are registered for each specimen container 201. For this reason, conveyance operation control of a plurality of specimen containers 201 with the same ID in the processing device can be realized at any timing, and even when a plurality of specimens are handled by a single holder, an evacuation area is not required in each of the function modules 3, and an increase in the scale of the device can be curbed.

In addition, when there are a plurality of specimen containers 201 with the same identification information, the display unit 2A that displays the request information registration screen 501 for setting analysis request items for each of the specimen containers 201 with the same identification information is further provided. Thus, it is possible to change the handling of a plurality of specimens depending on a situation and to deal with more various cases, thereby enabling more flexible pre-processing and post-processing to be realized.

Furthermore, the control unit 2 sets analysis request items for each specimen container 201 on the basis of information on the number of specimen containers 201 with the same identification information, particularly on the basis of number information notified from the host system, thereby enabling pre-processing and post-processing to be performed efficiently without wasting specimens.

Furthermore, it is possible to easily realization identification of a plurality of specimens by identifying specimen containers 201 with the same identification information on the basis of the order in which the conveyance of the specimen containers 201 is started by the conveyance unit 4.

Furthermore, when a dispensing process in the analysis request items set for each specimen container 201 is not completed, the control unit 2 continues processing with the specimen container 201 that has not yet been conveyed when there is a specimen container 201 that has not yet been conveyed, among the specimen containers 201 with the same identification information, and thus it is possible to minimize the occurrence of unperformed analysis due to dispensing being impossible.

In addition, the control unit 2 accepts changes to the number of specimen containers 201, the registered contents, and the analysis request items that are set for each specimen container 201 until the conveyance of the first specimen container 201 is started, and thus it is possible to curb the occurrence of errors in which pre-processing or post-processing cannot be started, for example, when the order of insertion does not match the order expected by the system.

### <Others>

The present invention is not limited to the above-described embodiment, and various modifications and applications can be made. The above-described embodiment is described in detail to describe the present invention in an easy-to-understand manner, and the present invention is not necessarily limited to having all of the configurations described.

For example, the specimen processing method of the present invention is not limited to "when a plurality of specimen container holders 203 each holding a single specimen container 201 containing a specimen and having identification information assigned thereto are conveyed to a function module 3 for performing pre-processing or post-processing associated with specimen analysis, and when it is determined that there are a plurality of specimen containers 201 with the same identification information at the time of acquiring analysis request items for a specimen, the request items are allocated to each specimen container 201, and the specimen containers 201 with the same identification information are individually conveyed to the function module 3, thereby performing pre-processing or post-processing", and may also be "when a plurality of specimen container holders 203 each holding a single specimen container 201 containing a specimen and having identification information assigned thereto are conveyed to a function module 3 for performing pre-processing or post-processing associated with specimen analysis, the conveyance of other specimen containers 201 with the same identification information is controlled on the basis of the conveyance status of the specimen containers 201 with the same identification information when there are a plurality of specimen containers 201 with the same identification information".

### Reference Signs List

1: host system
2: control unit
2A: display unit
3: function module (processing module)
4: conveyance unit
5: request information
201: specimen container
202: specimen identifier
203: specimen container holder
401: number registration screen
402: specimen identifier
403: number
404: trigger
405: selection trigger
501: request information registration screen
502: registered number
503: specimen order
504: dispensing necessity
505: registration decision trigger
601: target specimen ID
602: total number

## Claims

1. A specimen processing device comprising:
a plurality of specimen container holders each of which holds a single specimen container containing a specimen and having identification information assigned thereto;
a processing module that performs pre-processing or post-processing associated with analysis of the specimen;
a conveyance unit that is connected to the processing module and conveys the specimen container held in the specimen container holder to the processing module; and
a control unit that allocates a request item to each specimen container when it is determined that there are a plurality of the specimen containers with the same identification information at the time of acquiring an analysis request item for the specimen.

2. The specimen processing device according to claim 1, further comprising a display unit that displays a setting screen for setting an analysis request item for each of the specimen containers with the same identification information when there are a plurality of specimen containers with the same identification information.

3. The specimen processing device according to claim 1, wherein the control unit sets the analysis request item for each of the specimen containers, based on number information of the specimen containers having the same identification information.

4. The specimen processing device according to claim 3, wherein the control unit sets the analysis request item for each of the specimen containers, based on the number information notified from a host system.

5. The specimen processing device according to claim 1, wherein the specimen containers having the same identification information are identified based on the order in which the conveyance unit starts conveying the specimen containers.

6. The specimen processing device according to claim 1, wherein, when a dispensing process in the analysis request item set for each of the specimen containers is not completed, and there is a specimen container that has the same identification information and has not been conveyed, the control unit continues processing with the specimen container that has not been conveyed.

7. The specimen processing device according to claim 1, wherein the control unit accepts changes to the number of specimen containers, registered contents, and the analysis request item set for each of the specimen containers until the conveyance of the first specimen container is started.

8. A specimen processing device comprising:
a plurality of specimen container holders each of which holds a single specimen container containing a specimen and having identification information assigned thereto;
a processing module that performs pre-processing or post-processing associated with analysis of the specimen;
a conveyance unit that is connected to the processing module and conveys the specimen container held in the specimen container holder to the processing module; and
a control unit that controls, when there are a plurality of specimen containers having the same identification information, the conveyance of other specimen containers having the same identification information on the basis of the conveyance status of the specimen containers having the same identification information.

9. A specimen processing method comprising:
when a plurality of specimen container holders each of which holds a single specimen container containing a specimen and having identification information assigned thereto are conveyed to a processing module that performs pre-processing or post-processing associated with analysis of the specimen,
allocating a request item to each of the specimen containers when it is determined that there are a plurality of specimen containers with the same identification information at the time of acquiring an analysis request item for the specimen; and
individually conveying the specimen containers with the same identification information to the processing module and performing the pre-processing or the post-processing.
